# EUROPEAN PATENT APPLICATION

(11) **EP 4 700 527 A1**
(43) Date of publication of application: **25.02.2026**
(21) Application number: 24792585.2
(22) Date of filing: 11.04.2024
(51) Int. Cl.: G05F 1/56, G01R 19/165, G01R 31/26, H02H 3/08, H02J 1/00, H03K 17/04, H03K 17/08, H03K 17/081

(54) **CURRENT LIMITING CIRCUIT**

(30) Priority: 19.04.2023 JP 2023068302; 25.03.2024 JP 2024047573
(71) Applicant: Hioki E.E. Corporation, Ueda-shi, Nagano 386-1192 (JP)
(72) Inventor: KITAMURA, Keisuke, Ueda-shi Nagano 386-1192 (JP); NISHIJIMA, Chikako, Ueda-shi Nagano 386-1192 (JP)
(74) Representative: Novagraaf International SA
(86) International application number: PCT/JP2024/014608
(87) International publication number: WO 2024/219310

(57) **Abstract**

When a pulse current is input, a current interrupting MOSFET is quickly brought into an off state. A current limiting circuit 1 includes: a MOSFET M1 connected between an input terminal T1 and an output terminal T2 to allow and interrupt passage of a current I1; a series circuit SC1 connected between a source of the MOSFET M1 and the output terminal T2; and a transistor Q1 having a base connected to a connection point between one end of the series circuit SC1 and the source of the MOSFET M1 via a resistor R3, a collector connected to a gate of the MOSFET M1 via a resistor R1, and an emitter connected to the other end of the series circuit SC1, in which when supplied with the current I1 exceeding a pre-specified current value, the transistor Q1 is driven at a voltage generated at the one end of the series circuit SC1 to limit a current value of the current I1 passing through the MOSFET M1, and the current limiting circuit 1 includes a series circuit SC2 that allows conduction of a current I3 from the gate of the MOSFET M1 toward the output terminal T2.

## Description

### TECHNICAL FIELD

The present invention relates to a current limiting circuit that limits a current value of a current passing through a MOSFET arranged in a current supply path by driving a control element when supplied with a current exceeding a pre-specified current value.

### BACKGROUND ART

For example, as this type of current limiting circuit, the current limiting circuit disclosed in Patent Document 1 below is known. As illustrated in FIG. 2, this current limiting circuit 1X is configured to include a MOSFET M1X of enhancement type, a transistor Q1X of bipolar type, a floating power source PWX, an inductor L1X, and resistors R1X to R3X, R5X, and R6X.

Specifically, in this current limiting circuit 1X, the MOSFET M1X as an element that allows and interrupts passage of a current has a drain connected to an input end side of a current supply path, a source connected to an output end side of the current supply path, and a gate connected to one end of the resistor R1X to allow and interrupt passage of a current supplied to the current supply path depending on an application state of a bias voltage from the other end of the resistor R1X to the gate. A series circuit including a parallel circuit of the inductor L1X and the resistor R6X and the resistor R2X is connected between the source of the MOSFET M1X and the output end of the current supply path. The transistor Q1X has a base connected to the source of the MOSFET M1X via the resistor R3X, a collector connected to the gate of the MOSFET M1X via the resistor R1X and connected to a positive electrode of the floating power source PWX via the resistor R5X, and an emitter connected to a negative electrode of the floating power source PWX. The negative electrode of the floating power source PWX is connected to the output end of the current supply path.

In this current limiting circuit 1X, in a normal state, the MOSFET M1X is biased by the bias voltage output from the floating power source PWX to be held in an on state. In this state, the current limiting circuit 1X allows passage of a direct current input to the input end of the current supply path toward the output end.

On the other hand, when the current value of the supplied direct current increases beyond a pre-specified current value, the voltage at an end portion on the resistor R3X side of the resistor R2X increases due to the flow of the direct current. At this time, since the voltage of the base of the transistor Q1X increases, the transistor Q1X is brought into the on state. In this state, the direct current from the floating power source PWX flows into the transistor Q1X via the resistor R5X, and the gate voltage (bias voltage) of the MOSFET M1X is decreased. Therefore, since the MOSFET M1 is controlled to an off state, the current value of the current passing through the MOSFET M1X is controlled. As a result, this current limiting circuit 1X can limit the current value of the direct current flowing from the input end toward the output end of the current supply path to a pre-specified current value or less.

### CITATION LIST

### PATENT DOCUMENT

Patent Document 1: JP 2006-84395 A (Pages 7 to 10 and FIG. 4)

### SUMMARY OF INVENTION

### TECHNICAL PROBLEM

However, this known current limiting circuit 1X has a problem that when a current having an excessive current value is supplied to the input end side of the current supply path, the supply of the current having the excessive current value sometimes cannot be limited. Specifically, for example, when an abnormality occurs in a protected device connected to the output end side of the current supply path, or when a pulsed direct-current voltage having an excessive voltage value is instantaneously input to the input end side of the current supply path, a current (hereinafter, also called "pulse current") having a pulsed excessive current value greatly exceeding a pre-specified current value may be supplied to the input end side of the current supply path. In this case, in this current limiting circuit 1X, a pulse current flows through the resistor R2X and the voltage difference between both ends of the resistor R2X increases, and when the frequency of the pulse current is high when the transistor Q1X is to be brought into the on state, it is difficult for the transistor Q1X to be brought into the on state at a rapid response speed depending on the frequency characteristics. Therefore, when the frequency of the pulse current is high, this current limiting circuit 1X cannot quickly control the current interrupting MOSFET provided in the current supply path to the off state. For this reason, as a result of allowing passage of the pulse current from the input end side toward the output end side of the current supply path, this current limiting circuit 1X has a problem that there is a possibility of causing the protected device connected to the output end side of the current supply path to fail.

The present invention has been made in view of such problems, and a main object thereof is to provide a current limiting circuit that can quickly control a MOSFET to an off state to limit supply of a current having an excessive current value also when a pulse current is input.

### SOLUTION TO PROBLEM

In order to achieve the above object, a current limiting circuit according to the present invention includes: a MOSFET with a current input terminal connected to a side of an input end of a current supply path, a current output terminal connected to a side of an output end of the current supply path, and a control terminal connected to one end of a first resistor to allow and interrupt passage of a current supplied to the current supply path depending on an application state of a bias voltage from an other end of the first resistor to the control terminal; a series circuit of a second resistor and an inductor connected between the current output terminal of the MOSFET and the output end; and a control element with a control terminal connected via a third resistor to a connection point between one end of the series circuit and the current output terminal of the MOSFET, a current input terminal connected to the other end of the first resistor, and a current output terminal connected to an other end of the series circuit, the control element being driven by a voltage generated at the one end of the series circuit, when a current exceeding a pre-specified current value is supplied to the input end of the current supply path, to limit a current value of the current passing through the MOSFET by changing an application state of a bias voltage applied to the control terminal of the MOSFET via the first resistor, in which the current limiting circuit includes a pulse current conduction circuit including a capacitor and allowing conduction of a pulse current from the control terminal toward the output end of the MOSFET.

This current limiting circuit includes a pulse current conduction circuit configured to include a capacitor connected in series between a gate of the MOSFET and the output end of the current supply path and allowing passage of a pulse current, whereby when a pulse current having a high frequency with an excessive current value is about to flow through the MOSFET, the pulse current conduction circuit allows conduction of the pulse current from the gate of the MOSFET toward the output end, and therefore, a charge accumulated in a capacitance between a drain and the gate of the MOSFET and a capacitance between a source and the gate of the MOSFET can be instantaneously moved to the capacitor in the series circuit. Therefore, according to this current limiting circuit, as a result of being able to instantaneously lower (decrease) the voltage between the gate and the source of the MOSFET to below a threshold voltage by instantaneously decreasing the voltage, it is possible to instantaneously (quickly) control the MOSFET to the off state to instantaneously interrupt passage of the pulse current from the input end toward the output end of the current supply path. This enables this current limiting circuit to protect the protected device connected to the output end of the current supply path from overcurrent.

In the current limiting circuit according to the present invention, the pulse current conduction circuit includes a series circuit including the capacitor and a fourth resistor.

According to this current limiting circuit, the pulse current conduction circuit can be configured simply and inexpensively, and furthermore, the current limiting circuit can be configured simply and inexpensively.

The current limiting circuit according to the present invention includes: an FET control circuit that controls an operating state of the MOSFET by changing an application state of a bias voltage to the control terminal of the MOSFET; and a voltage monitoring circuit that monitors a voltage difference between the input end of the current supply path and a reference potential, and when the voltage difference exceeds a predetermined upper limit voltage value, interrupts passage of the current to the MOSFET by causing the FET control circuit to change an application state of a bias voltage applied to the control terminal of the MOSFET.

According to this current limiting circuit, the voltage monitoring circuit monitors the voltage difference between the input end of the current path and the reference potential, and, when the voltage difference exceeds a predetermined upper limit voltage value, causes the FET control circuit to change the application state of the bias voltage applied to the control terminal of the MOSFET to interrupt passage of the current to the MOSFET, whereby it is possible to avoid in advance a failure of the protected device due to input of the voltage having the excessive voltage value.

In the current limiting circuit according to the present invention, when the voltage difference exceeds the upper limit voltage value and then falls within a predetermined specified voltage range, the voltage monitoring circuit allows passage of the current to the MOSFET by causing the FET control circuit to change an application state of a bias voltage applied to the control terminal of the MOSFET.

According to this current limiting circuit, when the voltage difference exceeds the upper limit voltage value and then falls within a predetermined specified voltage range, the voltage monitoring circuit causes the FET control circuit to change the application state of the bias voltage applied to the control terminal of the MOSFET to allow passage of the current through the MOSFET, whereby it is possible to automatically supply the current to the current path when returning from an abnormal state to the normal state.

### ADVANTAGEOUS EFFECTS OF INVENTION

According to the current limiting circuit according to the present invention, it is possible to instantaneously control the MOSFET to the off state, and to instantaneously interrupt passage of the pulse current from the input end toward the output end of the current supply path.

### BRIEF DESCRIPTION OF DRAWINGS

FIG. 1 is a configuration diagram of a current limiting circuit 1.

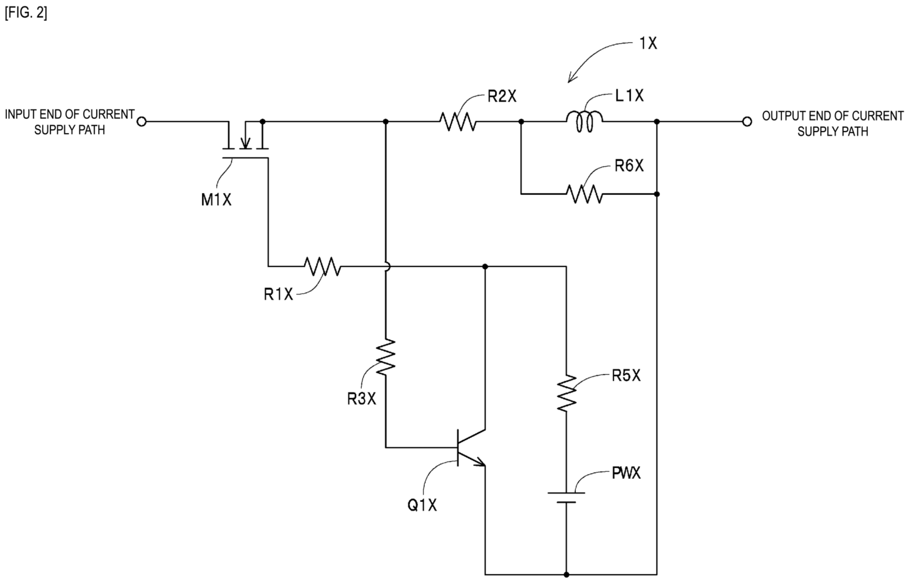

FIG. 2 is a configuration diagram of the known current limiting circuit 1X.

### DESCRIPTION OF EMBODIMENTS

Hereinafter, an embodiment of the current limiting circuit will be described with reference to the accompanying drawings.

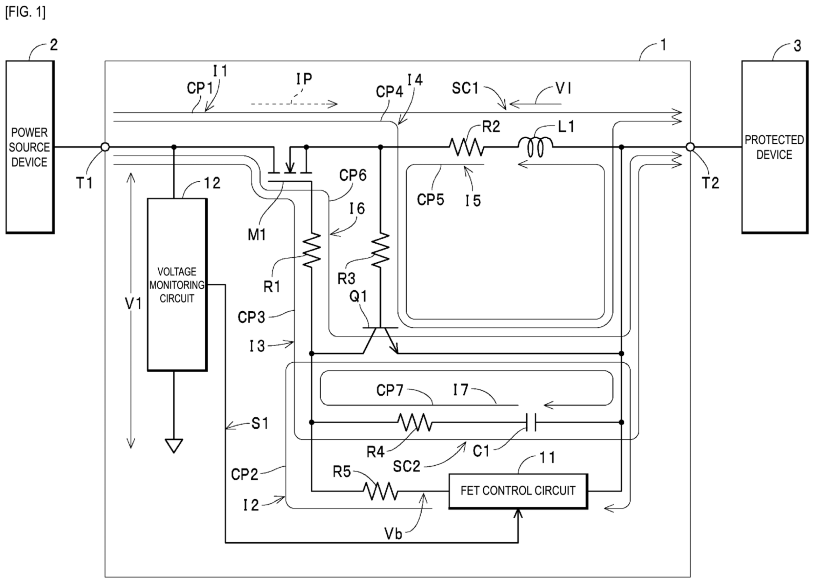

The current limiting circuit 1 illustrated in FIG. 1 is provided, for example, between a power source device 2 that generates a direct current and a protected device 3 driven by the direct current, and is configured to be able to limit the direct current supplied from the power source device 2 to the protected device 3 to a pre-specified current value or less and, when a pulse current is about to be supplied from the power source device 2 to the protected device 3, limit supply (passage) of the pulse current to the protected device 3.

Specifically, as illustrated in FIG. 1, the current limiting circuit 1 includes an input terminal T1 as an input end of the current supply path and an output terminal T2 as an output end of the current supply path, and is connected (disposed) between the power source device 2 connected to this input terminal T1 and the protected device 3 such as a constant current circuit as a load device connected to the output terminal T2.

The current limiting circuit 1 includes the MOSFET M1, a series circuit SC1, a transistor Q1, an FET control circuit 11, and a voltage monitoring circuit 12. In this case, the MOSFET M1 is an enhancement type N-channel type FET, functions as an element for allowing and interrupting passage of a current supplied to the current supply path, and has a drain as a current input terminal connected to the input terminal T1 side, a source as a current output terminal connected to the output terminal T2 side, and a gate as a control terminal connected to one end of a resistor R1 as a first resistor to allow passage of a current supplied to the current supply path at a pre-specified current value or less of the current supplied to the current supply path or interrupt passage of a current having an excessive current value depending on an application state of a bias voltage Vb from the other end of the resistor R1 to the gate. Specifically, when the bias voltage Vb having a voltage value of a threshold or more is applied to the gate via the resistor R1, the MOSFET M1 is controlled to the on state where a resistor value between the drain and the source is a sufficiently small resistor value, and when the voltage value of the applied bias voltage Vb is less than the threshold, the MOSFET M1 is controlled to an incomplete on state where the resistor value between the drain and the source is slightly large or the off state where the resistor value between the drain and the source is extremely high.

The series circuit SC1 includes a resistor R2 as a second resistor and an inductor L1, and is connected between the source of the MOSFET M1 and the output terminal T2. The transistor Q1 is an N-channel type transistor and constitutes an example of the control element. In this case, the base as a control terminal of the transistor Q1 is connected via a resistor R3 as a third resistor to a connection point between one end (end portion on the MOSFET M1 side at the resistor R2) of the series circuit SC1 and the source of the MOSFET M1, a collector as a current input terminal is connected to the other end of the resistor R1, thereby being connected to the gate of the MOSFET M1 via the resistor R1, and an emitter as a current output terminal is connected to the other end (end portion on the output terminal T2 side at the inductor L1) of the series circuit SC1.

The FET control circuit 11 controls an operating state of on/off of the MOSFET M1 by changing the application state of the bias voltage to the gate of the MOSFET M1. Specifically, in the normal state where a voltage within a predetermined specified voltage range is output from the power source device 2, the FET control circuit 11 supplies the bias voltage Vb having a voltage value exceeding the threshold to the gate of the MOSFET M1 via a resistor R5 and the resistor R1, thereby controlling the MOSFET M1 to the on state. On the other hand, when a control signal S1 is input from the voltage monitoring circuit 12, the FET control circuit 11 stops the output of the bias voltage Vb, thereby controlling the MOSFET M1 to the off state to interrupt passage of the current supplied to the current supply path.

The voltage monitoring circuit 12 is connected between the input terminal T1 as an input end of the current supply path and the reference potential (in the present example, a ground potential) to monitor a voltage V1, which is a voltage difference between the input terminal T1 and the reference potential. The voltage monitoring circuit 12 causes the FET control circuit 11 to change the application state of the bias voltage applied to the gate of the MOSFET1, thereby allowing or interrupting passage of the current to the MOSFET1. Specifically, when the voltage V1 exceeds the upper limit voltage value (upper limit voltage value of the specified voltage range described above), the voltage monitoring circuit 12 causes the application state of the bias voltage applied to the gate of the MOSFET M1 to be changed, thereby causing the MOSFET M1 to interrupt passage of the current supplied to the current supply path. More specifically, the voltage monitoring circuit 12 outputs the control signal S1 to the FET control circuit 11 to stop supply of the bias voltage Vb, thereby causing the MOSFET M1 to be controlled to the off state to interrupt passage of the current supplied to the current supply path. When the voltage V1 exceeds the upper limit voltage value and then falls within the specified voltage range described above, the voltage monitoring circuit 12 causes the FET control circuit 11 to change the application state of the bias voltage applied to the gate of the MOSFET M1, thereby causing the MOSFET M1 to allow passage of the current supplied to the current supply path. Specifically, by stopping output of the control signal S1 to cause the FET control circuit 11 to restart the supply of the bias voltage Vb, the voltage monitoring circuit 12 causes the MOSFET M1 to be controlled to the on state to allow passage of the current supplied to the current supply path.

This current limiting circuit 1 includes a series circuit SC2 including a capacitor C1 and a resistor R4 as a fourth resistor connected in series between the gate of the MOSFET M1 and the output terminal T2, specifically, between the other end of the resistor R3 having one end connected to the gate of the MOSFET M1 and the output terminal T2. This series circuit SC2 functions as a pulse current conduction circuit to allow conduction (passage) of a pulse current from the gate of the MOSFET M1 toward the output terminal T2 when a high-frequency pulse current is about to flow through the MOSFET M1.

Next, the operation of the current limiting circuit 1 will be described with reference to FIG. 1.

First, the operation of the current limiting circuit 1 in the normal state where the voltage value (voltage V1) of the direct-current voltage at the input terminal T1 (input end of the current supply path) is within the specified voltage range and the direct current of a pre-specified current value or less is supplied to the current supply path will be described. In this normal state, since the voltage value of the voltage V1 between the input terminal T1 and the reference potential is within the specified voltage range, the voltage monitoring circuit 12 stops output of the control signal S1. In this state, the FET control circuit 11 outputs the bias voltage Vb to the gate of the MOSFET M1 via the resistor R5 and the resistor R1. Therefore, the MOSFET M1 is controlled to the on state. In this state, a direct current I1 output from the power source device 2 flows through a current path CP1 (current supply path) including the input terminal T1, the drain of the MOSFET M1, the source of the MOSFET M1, the series circuit SC1, and the output terminal T2, and is supplied to the protected device 3.

On the other hand, when the current value of the supplied current I1 increases to exceed the pre-specified current value, due to the flow of the current I1, the voltage at the end portion on the source side (resistor R3 side) of the MOSFET M1 at the resistor R2 increases. At this time, this increased voltage is input to the base of the transistor Q1 via the resistor R3, and therefore the base voltage of the transistor Q1 increases, and as a result, the transistor Q1 is brought into the on state. In this state, a current I2 output from an output unit of the FET control circuit 11 flows through a current path CP2 including the resistor R5, the collector of the transistor Q1, the emitter of the transistor Q1, and an input unit of the FET control circuit 11, and at this time, due to voltage drop occurring in the resistor R5, the voltage value of the bias voltage Vb supplied to the gate of the MOSFET M1 is decreased to below the threshold voltage. Therefore, the MOSFET M1 is controlled to the incomplete on state or the off state, whereby the current value of the current I1 passing through the MOSFET M1 from the input end (in the present example, the input terminal T1) toward the output end (in the present example, the output terminal T2) of the current supply path is limited to the pre-specified current value or less.

When the current value of the supplied current I1 is decreased to the pre-specified current value or less, the voltage at the end portion on the resistor R3 side of the resistor R2 decreases. At this time, since the base voltage of the transistor Q1 decreases, the transistor Q1 is brought into the off state. In this state, since the current I2 does not flow through the current path CP2, no voltage drop occurs in the resistor R5, and as a result, the bias voltage Vb having a specified voltage exceeding the threshold voltage is output from the FET control circuit 11 to the gate of the MOSFET M1. Therefore, the MOSFET M1 is controlled to the on state, whereby the current I1 of the pre-specified current value or less is supplied to the current path CP1 from the input end (in the present example, the input terminal T1) toward the output end (in the present example, the output terminal T2) of the current supply path. As a result, this current limiting circuit 1 can control the current value of the current I1 input to the input end of the current supply path to the specified current value or less.

On the other hand, for example, when an abnormality occurs in the protected device 3 or when a pulsed direct-current voltage having a high frequency is instantaneously output from the power source device 2 at an excessive voltage value, a pulse current Ip (see FIG. 1) exceeding a pre-specified current value may attempt to be supplied to the input terminal T1. In this case, in this current limiting circuit 1, the pulse current Ip is to instantaneously flow through the current path CP1, but the pulse current Ip is less likely to flow due to the inductive reactance of the inductor L1. Therefore, at this time, the voltage (voltage between both ends of the resistor R2) at the end portion on the source side (resistor R3 side) of the MOSFET M1 at the resistor R2 does not immediately increase, and the transistor Q1 maintains the off state also due to the frequency characteristics of the transistor Q1. In this case, the voltage monitoring circuit 12 fails to respond to the pulsed direct-current voltage having a high frequency and stops output of the control signal S1. Therefore, in this state, the MOSFET M1 maintains the on state.

On the other hand, a current I3, which is a part of the pulse current Ip input to the input terminal T1, instantaneously flows through a current path CP3 including the input terminal T1, the capacitance between the drain and the gate of the MOSFET M1, the capacitance between the source and the gate of the MOSFET M1, the resistor R1, the series circuit SC2, and the output terminal T2. At that time, the charge accumulated in the capacitance between the drain and the gate of the MOSFET M1 and the capacitance between the source and the gate of the MOSFET M1 instantaneously move to the capacitor C1 in the series circuit SC2. Therefore, since the voltage between the gate and the source of the MOSFET M1 instantaneously decreases to fall below (decrease) the threshold voltage, the MOSFET M1 is instantaneously controlled to the off state. As a result, passage of the pulse current Ip from the input terminal T1 toward the output terminal T2 is instantaneously interrupted.

Thereafter, a current I4, which is a part of the pulse current Ip, flows through a current path CP4 including the input terminal T1, the drain of the MOSFET M1, the source of the MOSFET M1, the resistor R3, the base of the transistor Q1, the emitter of the transistor Q1, and the output terminal T2 to be supplied to the transistor Q1 as a bias current. At the same time, a current I5 due to a back electromotive force VI generated in the inductor L1 by a flow of a part of the pulse current Ip flows through a current path CP5 including the inductor L1, the resistor R2, the resistor R3, the base of the transistor Q1, the emitter of the transistor Q1, and the inductor L1 to be supplied to the transistor Q1 as a bias current. By this, the transistor Q1 gradually moves (transitions) to the on state according to the frequency characteristics. At this time, since the inductor L1 exists in the series circuit SC1, the transistor Q1 moves (transitions) to the on state more quickly than when only the current I4 is supplied to the base of the transistor Q1.

On the other hand, at a time point when the charge is sufficiently accumulated in the capacitor C1, the current I3 is brought into a state of not flowing through the current path CP3. However, due to the transistor Q1 being brought into the on state, a current I6 flows through a current path CP6 including the input terminal T1, the drain of the MOSFET M1, the gate of the MOSFET M1, the resistor R1, the collector of the transistor Q1, the emitter of the transistor Q1, and the output terminal T2 to maintain a state where the voltage between the gate and the source of the MOSFET M1 is lowered to be the threshold voltage or less (decreasing state), and as a result, the MOSFET M1 is reliably maintained in the off state. At this time, a current I7 based on a charge stored in the capacitor C1 due to the current I3 flowing through the current path CP3 flows through a current path CP7 including the capacitor C1, the resistor R4, the collector of the transistor Q1, the emitter of the transistor Q1, and the capacitor C1, whereby the charge accumulated in the capacitor C1 is consumed (discharged). In this case, the resistor R4 functions as a current limiting resistor to avoid a situation in which the current I7 having a large current value flows and the transistor Q1 is damaged when a large amount of charge is accumulated in the capacitor C1.

On the other hand, when detecting that the voltage V1 between the input terminal T1 and the reference potential exceeds the upper limit voltage value of the specified voltage range, the voltage monitoring circuit 12 outputs the control signal S1 to the FET control circuit 11. By this, the FET control circuit 11 stops the output of the bias voltage Vb. As a result, the MOSFET M1 is more reliably maintained in the off state, and more reliably interrupts passage of the pulse current Ip from the input terminal T1 toward the output terminal T2.

Thereafter, the current value of the current I4 is reduced along with a decrease in the instantaneous value of the pulse current Ip, and the current value of the current I5 is reduced along with reduction in the energy of the inductor L1, whereby the transistor Q1 moves to the off state.

Next, when the input of the pulse current Ip is stopped, the voltage monitoring circuit 12 detects that the voltage V1 between the input terminal T1 and the reference potential falls within the specified voltage range, and at that time, stops the output of the control signal S1 to the FET control circuit 11. By this, the FET control circuit 11 starts (restarts) the output of the bias voltage Vb. At this time, the gate voltage of the MOSFET M1 increases according to a time constant based on each resistor value of the resistors R1, R4, and R5, each capacitance between the drain and source and the gate of the MOSFET M1, and the capacitance of the capacitor C1. Thereafter, when the gate voltage exceeds the threshold voltage, the MOSFET M1 is controlled to the on state. As a result, the current limiting circuit 1 is maintained in the normal state where supply of the current I1 from the power source device 2 to the protected device 3 is allowed.

In this manner, this current limiting circuit 1 includes the pulse current conduction circuit (series circuit SC2) configured to include the capacitor C1 connected in series between the gate of the MOSFET M1 and the output end (output terminal T2) of the current supply path and allowing passage of the pulse current Ip, whereby when the pulse current Ip having a high frequency with an excessive current value is about to flow through the MOSFET M1, the pulse current conduction circuit allows conduction of the pulse current Ip from the gate of the MOSFET M1 toward the output terminal T2, and therefore, a charge accumulated in a capacitance between the drain and the gate of the MOSFET M1 and a capacitance between the source and the gate of the MOSFET M1 can be instantaneously moved to the capacitor C1 in the series circuit SC2. Therefore, according to this current limiting circuit 1, the voltage between the gate and the source of the MOSFET M1 can be instantaneously decreased and instantaneously lowered (decreased) below the threshold voltage, and as a result, the MOSFET M1 can be instantaneously (quickly) controlled to the off state to instantaneously interrupt the passage of the pulse current Ip from the input terminal T1 toward the output terminal T2 of the current supply path. This enables this current limiting circuit 1 to protect the protected device 3 connected to the output end of the current supply path from overcurrent.

According to this current limiting circuit 1, the voltage monitoring circuit 12 monitors the voltage difference (voltage V1) between the input end (input terminal T1) of the current path CP1 and the reference potential (ground potential), and, when the voltage V1 exceeds a predetermined upper limit voltage value, causes the FET control circuit 11 to change the application state of the bias voltage applied to the gate of the MOSFET M1 to interrupt passage of the current I1 to the MOSFET M1, whereby it is possible to avoid in advance a failure of the protected device 3 due to input of the voltage having the excessive voltage value.

According to this current limiting circuit 1, when the voltage V1 exceeds the upper limit voltage value and then falls within a predetermined specified voltage range, the voltage monitoring circuit 12 causes the FET control circuit 11 to change the application state of the bias voltage applied to the gate of the MOSFET M1 to allow passage of the current I1 through the MOSFET M1, whereby it is possible to automatically supply the current I1 to the current path CP1 when returning from an abnormal state to the normal state where the voltage within the predetermined specified voltage range is output from the power source device 2.

Note that the present invention is not limited to the configuration of the current limiting circuit 1 described above, and can be appropriately changed. For example, in a configuration using a capacitor having a small capacitance as the capacitor C1 of the series circuit SC2 constituting the pulse current conduction circuit, the current value of the current I7 flowing through the current path CP7 is small. Therefore, since there is a low possibility of the transistor Q1 being damaged, the arrangement of the resistor R4 can be omitted. That is, the series circuit SC2 can include only the capacitor C1. According to the current limiting circuit 1 having this configuration, the pulse current conduction circuit can be configured simply and inexpensively, and furthermore, the current limiting circuit 1 can be configured simply and inexpensively.

The connection between the resistor R2 and the inductor L1 in the series circuit SC1 can also be reversely connected, that is, the series circuit SC1 can be configured by arranging the inductor L1 on the source side of the MOSFET M1 and arranging the resistor R2 on the output terminal T2 side. The connection between the resistor R4 and the capacitor C1 in the series circuit SC2 can also be reversely connected, that is, the series circuit SC2 can be configured by arranging the capacitor C1 on the resistor R1 side and arranging the resistor R4 on the output terminal T2 side.

It is also possible to adopt a configuration in which the resistor R4 (or, in the case of the reverse connection, the capacitor C1) is directly connected to the gate of the MOSFET M1 without the resistor R1 in between.

Furthermore, in the current limiting circuit 1 described above, a configuration in which the voltage monitoring circuit 12 is arranged between the input terminal T1 and the reference potential to monitor the voltage V1 between the input terminal T1 and the reference potential is adopted, but the present invention is not limited to this. For example, it is also possible to adopt a configuration in which the voltage monitoring circuit 12 is arranged between the output terminal T2 and the reference potential to monitor the voltage difference between the output terminal T2 and the reference potential.

### INDUSTRIAL APPLICABILITY

According to the invention of the present application, when the pulse current Ip is supplied to the current supply path, the voltage between the gate and the source of the MOSFET M1 can be instantaneously decreased and instantaneously lowered (decreased) below the threshold voltage, and as a result, the MOSFET M1 can be instantaneously controlled to the off state to instantaneously interrupt the passage of the pulse current Ip from the input terminal T1 toward the output terminal T2 of the current supply path. This enables the invention of the present application to be widely applied to such a current limiting circuit.

### REFERENCE SIGNS LIST

1 Current limiting circuit
12 Voltage monitoring circuit
C1 Capacitor
CP1 to CP7 Current path
Ip Pulse current
L1 Inductor
M1 MOSFET
R1 to R7 Resistor
Q1 Transistor
SC1, SC2 Series circuit
T1 Input terminal
T2 Output terminal
V1 Voltage

## Claims

1. A current limiting circuit comprising:
a MOSFET with a current input terminal connected to a side of an input end of a current supply path, a current output terminal connected to a side of an output end of the current supply path, and a control terminal connected to one end of a first resistor to allow and interrupt passage of a current supplied to the current supply path depending on an application state of a bias voltage from an other end of the first resistor to the control terminal;
a series circuit of a second resistor and an inductor connected between the current output terminal of the MOSFET and the output end; and
a control element with a control terminal connected via a third resistor to a connection point between one end of the series circuit and the current output terminal of the MOSFET, a current input terminal connected to the other end of the first resistor, and a current output terminal connected to an other end of the series circuit,
the control element being driven by a voltage generated at the one end of the series circuit, when a current exceeding a pre-specified current value is supplied to the input end of the current supply path, to limit a current value of the current passing through the MOSFET by changing an application state of a bias voltage applied to the control terminal of the MOSFET via the first resistor, wherein
the current limiting circuit includes a pulse current conduction circuit including a capacitor and allowing conduction of a pulse current from the control terminal of the MOSFET toward the output end.

2. The current limiting circuit according to claim 1, wherein the pulse current conduction circuit includes a series circuit including the capacitor and a fourth resistor.

3. The current limiting circuit according to claim 1 or 2, comprising:
an FET control circuit that controls an operating state of the MOSFET by changing an application state of a bias voltage to the control terminal of the MOSFET; and
a voltage monitoring circuit that monitors a voltage difference between the input end of the current supply path and a reference potential, and when the voltage difference exceeds a predetermined upper limit voltage value, interrupts passage of the current to the MOSFET by causing the FET control circuit to change an application state of a bias voltage applied to the control terminal of the MOSFET.

4. The current limiting circuit according to claim 3, wherein when the voltage difference exceeds the upper limit voltage value and then falls within a predetermined specified voltage range, the voltage monitoring circuit allows passage of the current to the MOSFET by causing the FET control circuit to change an application state of a bias voltage applied to the control terminal of the MOSFET.
